# EUROPÄISCHE PATENTSCHRIFT

(11) **EP 4 064 819 B1**
(45) Veröffentlichungstag und Bekanntmachung des Hinweises auf die Patenterteilung: **10.01.2024**
(21) Anmeldenummer: 20811577.4
(22) Anmeldetag: 20.11.2020
(51) Int. Cl.: A01B 76/00, A01B 69/00

(54) **VERFAHREN ZUM BEARBEITEN VON PFLANZEN AUF EINEM FELD, ZUM GENERIEREN VON TRAININGSDATEN UND ZUM TRAINIEREN EINES NEURONALEN NETZES**
METHOD FOR TREATING PLANTS IN A FIELD, FOR GENERATING TRAINING DATA AND FOR TRAINING A NEURAL NETWORK
PROCÉDÉ DE TRAITEMENT DE PLANTES DANS UN CHAMP, DE GÉNÉRATION DE DONNÉES D'APPRENTISSAGE ET D'ENTRAÎNEMENT D'UN RÉSEAU DE NEURONES

(30) Priorität: 25.11.2019 DE 102019218187
(43) Veröffentlichungstag der Anmeldung: 05.10.2022
(73) Patentinhaber: Robert Bosch GmbH, 70442 Stuttgart (DE)
(72) Erfinder: HOEFERLIN, Markus, 75397 Simmozheim (DE); GOHLKE, Maurice, 70178 Stuttgart (DE); AMEND, Sandra, 71636 Ludwigsburg (DE); DI MARCO, Daniel, 70469 Stuttgart (DE)
(86) Internationale Anmeldenummer: PCT/EP2020/082828
(87) Internationale Veröffentlichungsnummer: WO 2021/105015

(56) Entgegenhaltungen:
- WO-A1-2019/215582
- CA-A1- 3 065 154
- DE-A1-102019 218 192
- DE-T5-112014 000 906
- US-A1- 2019 114 481
- US-B1- 10 255 670

## Beschreibung

### Technisches Gebiet

Die vorliegende Erfindung betrifft ein Verfahren zum Bearbeiten von Pflanzen auf einem Feld, ein Verfahren zum Generieren von Trainingsdaten und ein Verfahren zum Trainieren eines neuronalen Netzes.

Von den vielfältigen Aufgaben in der Landwirtschaft nimmt die Beikrautregulierung für den Ertragserfolg eine zentrale Rolle ein. Die Kosten für Pestizide sind erheblich und ihre Auswirkungen auf die Umwelt problematisch. Es werden daher vermehrt autonom arbeitende Systeme zur Bearbeitung von Pflanzen, d.h. Nutzpflanzen und Beikräutern, verwendet. Die Bearbeitung kann dabei mechanisch, z.B. durch eine Fräse, aber auch durch eine gezielte Ausbringung von Pestiziden, z.B. durch einen gesteuerten Sprayer, erfolgen. Auf diese Weise kann der Einsatz von Pestiziden vermieden oder zumindest reduziert werden, wodurch der Einfluss auf die Umwelt sowie der Kostenaufwand reduziert werden.

Für die selektive (die zu bearbeitende Pflanze wird von anderen Pflanzen und dem Boden unterschieden) Pflanzenbearbeitung auf einem Feld ist die semantische Segmentierung der bevorzugte Algorithmus zum Erkennen der Position der zu bearbeitenden Pflanze auf dem Feld, um z.B. ein Bearbeitungswerkzeug von einer erkannten Position einer Nutzpflanze weg- und zu einer Position eines Beikrauts hinzuführen. Zudem können mit einer semantischen Segmentierung auch stark überlappende Pflanzen pixelgenau voneinander getrennt werden.

Verfahren für die pixelweise semantische Segmentierung von Bildern sind im Stand der Technik aus folgenden Dokumenten bekannt: Long, J., Shelhamer, E., & Darrell, T. (2015). "Fully convolutional networks for semantic segmentation". In Proceedings of the IEEE conference on computer vision and pattern recognition (pp. 3431-3440). Jégou, S., Drozdzal, M., Vazquez, D., Romero, A., & Bengio, Y. (2017). "The one hundred layers tiramisu: Fully convolutional densenets for semantic segmentation". In Proceedings of the IEEE Conference on Computer Vision and Pattern Recognition Workshops (pp. 11-19).

Eine räumliche Auflösung, die von der pixelweisen semantischen Segmentierung berechnet wird, ist gleich der räumlichen Auflösung des ursprünglich erfassten Bilds. Diese räumliche Auflösung (z.B. 0,5 mm pro Pixel) ist jedoch um ein vielfaches höher als die tatsächlich benötigte räumliche Auflösung, da die Bearbeitungswerkzeuge aufgrund ihrer Ausgestaltung eine begrenzte räumliche Genauigkeit bereitstellen.

Demzufolge ergeben sich die folgenden Nachteile bei Anwendung der semantischen Segmentierung:
- reduzierte Geschwindigkeit, da ein Teil eines neuronalen Netzes, der die ursprüngliche Auflösung wiederherstellt, viel Rechenzeit benötigt;
- erhöhter Trainingsaufwand, da der die ursprüngliche Auflösung des neuronalen Netzes wiederherstellende Teil des neuronalen Netzes trainiert werden muss, was dazu führt, dass der Berechnungsaufwand für das Training erhöht sind und mehr Trainingsdaten, d.h. eine größere Datenmenge mit annotierter Ground Truth, benötigt werden;
- gesteigerter Aufwand und höhere Kosten für die Annotation von Bildern mit Ground Truth, da jeder Pixel einzeln annotiert werden muss;
- Qualität der Ground Truth für die semantische Segmentierung ist von geringerer Qualität, da es nicht möglich ist, jeden Pixel korrekt zu annotieren;
- erhöhtes Rauschen bei der Klassifikation auf Pixelebene, da weniger Merkmale bzw. Informationen für die Klassifikation der einzelnen Pixel berücksichtigt wird.

Die Auflösung des eingegebenen Bilds kann jedoch nicht reduziert werden, da ansonsten Details (z.B. filigrane Strukturen von Blättern) im Bild verloren gehen und nachfolgend nicht als Information für die Generierung von Merkmalen durch das neuronale Netz zur Verfügung stehen, wodurch eine Genauigkeit der semantischen Segmentierung verringert wird.

Die CA 3 065 154 A1 offenbart ein Verfahren zur Steuerung eines Bodenbearbeitungsmittels, basierend auf einer Bildverarbeitung.

Die US 10 255 670 B1 offenbart eine landwirtschaftliche autonome Erntemaschine mit einem Bildsensorsystem.

Die DE 11 2014 000906 T5 offenbart ein Ernteguterfassungssystem mit Sensoren zum Erfassen oder Detektieren eines oder mehrerer Erntegut-Attributwerte für ein Erntegut von Futterpflanzen.

Die WO 2019/215582 A1 offenbart ein Verfahren und System zur Unkrautbekämpfung.

Die US 2019/114481 A1 offenbart ein Verfahren und ein System zur Erkennung von Mustermerkmalen.

Es ist daher Aufgabe der Erfindung, die genannten Nachteile, die sich bei Anwendung der semantischen Segmentierung ergeben, zu vermeiden. Die Aufgabe wird durch die Merkmale der unabhängigen Ansprüche gelöst. Vorteilhafte Ausgestaltungen sind in den abhängigen Ansprüchen angegeben.

### Kurzbeschreibung der Figuren

Fig. 1 zeigt ein Ablaufdiagramm des erfindungsgemäßen Verfahrens gemäß einer ersten Ausführungsform;
Fig. 2 zeigt einen schematischen Aufbau eines neuronalen Netzes zur semantischen Segmentierung eines Bilds;
Fig. 3 zeigt eine Aufnahme eines Feldes, auf dem Pflanzen wachsen, die pixelweise semantisch segmentiert ist;
Fig. 4 zeigt einen schematischen Aufbau eines neuronalen Netzes zur semantischen Segmentierung gemäß der ersten Ausführungsform;
Fig. 5 zeigt einen schematischen Aufbau des neuronalen Netzes zur semantischen Segmentierung gemäß der ersten Ausführungsform, das nur bis zu einer bestimmten räumlichen Auflösung aufgebaut ist;
Fig. 6 zeigt ein Ablaufdiagramm des erfindungsgemäßen Verfahrens gemäß einer zweiten Ausführungsform;
Fig. 7 zeigt einen schematischen Aufbau eines neuronalen Netzes gemäß der zweiten Ausführungsform.

### Beschreibung der Ausführungsformen

Nachstehend werden Ausführungsformen der vorliegenden Erfindung unter Bezugnahme auf die beigefügten Figuren beschrieben.

### Erste Ausführungsform

Ein Fahrzeug, an dem eine Vorrichtung zum Bearbeiten der Pflanzen angebracht ist, fährt ein Feld entlang einer vorgegebenen Route ab und die zu bearbeitende Objekte bzw. Pflanzen werden durch Ausführen des erfindungsgemäßen Verfahrens nacheinander einzeln bearbeitet. Das Fahrzeug fährt das Feld dabei autonom ab, kann das Feld aber auch gemäß einer Steuerung durch einen Bediener abfahren.

Unter einem Feld kann eine abgegrenzte Bodenfläche für den Anbau von Nutzpflanzen oder auch ein Teil eines solchen Feldes verstanden werden. Unter einer Nutzpflanze wird eine landwirtschaftlich genutzte Pflanze verstanden, die selbst oder deren Frucht genutzt wird, z.B. als Nahrungsmittel, Futtermittel oder als Energiepflanze. Die Samen und folglich die Pflanzen werden vornehmlich in Reihen angeordnet, wobei zwischen den Reihen sowie zwischen den einzelnen Pflanzen innerhalb einer Reihe Objekte vorhanden sein können. Die Objekte sind jedoch unerwünscht, da sie den Ertrag der Pflanzen mindern oder einen störenden Einfluss während der Bewirtschaftung und/oder der Ernte darstellen. Unter einem Objekt kann jegliche Pflanze, die eine andere als die Nutzpflanze ist, oder jeglicher Gegenstand verstanden werden. Objekte können insbesondere Beikräuter, Hölzer und Steine sein.

Die Vorrichtung zum Bearbeiten von Pflanzen weist dazu mindestens die folgenden Elemente auf: ein Bearbeitungswerkzeug, ein Bilderfassungsmittel, verschiedene Sensorelemente (z.B. einen Positionssensor, einen Geschwindigkeitssensor, einen Neigungssensor, einen Abstandssensor usw.), eine Speichereinheit und eine Recheneinheit.

Die Vorrichtung zum Bearbeiten von Pflanzen ist auf einem dafür vorgesehenen Fahrzeug installiert, das durch eine Batterie betrieben wird, aber auch durch eine andere Energiequelle, wie etwa einen Verbrennungsmotor, betrieben werden kann. Die Vorrichtung kann darüber hinaus auch an einem landwirtschaftlichen Fahrzeug oder einem Anhänger für das landwirtschaftliche Fahrzeug angebracht sein. Die Vorrichtung wird dabei durch eine Energiequelle des Fahrzeugs betrieben, kann aber auch durch eine dafür vorgesehene separate Energiequelle betrieben werden.

Das Bearbeitungswerkzeug ist ein mechanisches Werkzeug, das an einer beweglichen Vorrichtung angebracht ist, so dass es zu einer zu bearbeitenden Pflanze hin- oder davon weggeführt werden kann und so ausgebildet ist, dass damit eine Pflanze bearbeitet wird. Die bewegliche Vorrichtung ist zum Beispiel ein Arm mit Gelenken, der durch Elektromotoren oder eine Hydraulik bewegt wird. Das Bearbeitungswerkzeug ist z.B. eine Fräse, die die Pflanze, d.h. in diesem Fall ein Beikraut, im Bereich der Wurzeln abtrennt. Das Bearbeitungswerkzeug kann aber auch ein Sprayer sein, mit dem ein Pestizid in Richtung einer zu bearbeitenden Pflanze gesprüht wird. Es ist anzumerken, dass der Sprayer auch zum Ausbringen eines Pflanzenschutzmittels oder von Dünger auf eine Nutzpflanze eingesetzt werden kann. Darüber hinaus sind noch weitere Bearbeitungswerkzeuge, wie etwa ein elektrisches Bearbeitungswerkzeug, ein Laser, Mikrowellen, heißes Wasser oder Öl, denkbar. Das am Fahrzeug installierte Bearbeitungswerkzeug weist dabei eine spezifische räumliche Genauigkeit auf. Die räumliche Genauigkeit bei einer Fräse hängt von der beweglichen Vorrichtung und der mechanischen Ausgestaltung (z.B. dem Durchmesser) der Fräse selbst ab. Die räumliche Genauigkeit bei einem Sprayer hängt von einem Düsenwinkel des Sprayers ab. Die räumliche Genauigkeit bei einem Sprayer ist dabei um ein vielfaches geringer als bei einer Fräse. Darüber hinaus ist es auch möglich, dass mehrere Bearbeitungswerkzeuge an einer Vorrichtung zum Bearbeiten von Pflanzen angebracht sind, die gleichzeitig betrieben werden können. Es können auch unterschiedliche Arten von Bearbeitungswerkzeugen an derselben Vorrichtung zum Bearbeiten von Pflanzen angebracht sein.

Das Bildererfassungsmittel ist eine Kamera, wie z.B. eine CCD-Kamera, eine CMOS-Kamera usw., die ein Bild im sichtbaren Bereich erfasst und als RGB-Werte oder als Werte in einem anderen Farbraum bereitstellt. Das Bilderfassungsmittel kann aber auch eine Kamera sein, die ein Bild im Infrarot-Bereich erfasst. Für das Erfassen von Pflanzen ist ein Bild im Infrarot-Bereich besonders geeignet, da eine Reflexion der Pflanzen in diesem Frequenzbereich deutlich erhöht ist. Das Bilderfassungsmittel kann aber auch z.B. eine Mono-, RGB-, Multispektral-, Hyperspektral-Kamera sein. Das Bilderfassungsmittel kann auch eine Tiefenmessung, z.B. durch eine Stereokamera, eine Time-of-Flight-Kamera usw., bereitstellen. Es ist möglich, dass mehrere Bilderfassungsmittel vorhanden sind, und dass die Bilder von den unterschiedlichen Bilderfassungsmitteln sowie die Daten von den verschiedenen Sensorelementen im Wesentlichen synchron erfasst werden.

Für den Betrieb der Vorrichtung zum Bearbeiten von Pflanzen sind weitere Daten erforderlich, die unter Verwendung von verschiedenen Sensorelementen erfasst werden. Die Sensorelemente können dabei einen Positionssensor, z.B. GPS, hochgenaues GPS usw., einen Geschwindigkeitssensor, einen Neigungssensor, einen Abstandssensor, aber auch andere Sensoren, wie etwa einen Wettersensor etc., umfassen.

Die Speichereinheit ist ein nichtflüchtiges gegenständliches Speichermedium, wie z.B. ein Halbleiterspeicher, in dem Daten längere Zeit gespeichert werden können. Die Daten bleiben in der Speichereinheit auch dann gespeichert, wenn keine Betriebsspannung an der Speichereinheit anliegt. Die Speichereinheit speichert ein Programm zum Ausführen des erfindungsgemäßen Verfahrens und dafür erforderliche Betriebsdaten. Zudem werden auf der Speichereinheit die vom Bilderfassungsmittel erfassten Bilder und die von den Sensorelementen erfassten Daten gespeichert. Es können aber auch andere Daten und Informationen in der Speichereinheit gespeichert werden.

Das in der Speichereinheit gespeicherte Programm enthält Anweisungen in Form von Programmcode, der in einer beliebigen Programmiersprache geschrieben ist, die der Reihe nach ausgeführt werden, so dass das erfindungsgemäße Verfahren zum Bearbeiten der Pflanze auf dem Feld ausgeführt wird. Das Programm kann dabei auch in mehrere Dateien aufgeteilt sein, die eine vorgegebene Beziehung zueinander aufweisen.

Die Recheneinheit ist eine arithmetisch-logische Einheit, die in Form eines Prozessors (z.B. CPU, GPU, TPU) implementiert ist. Die Recheneinheit ist imstande, Daten von der Speichereinheit zu lesen und Anweisungen entsprechend dem Programm auszugeben, um das Bilderfassungsmittel, die Sensorelemente und Aktoren, wie etwa das Bearbeitungswerkzeug, die allesamt mit der Recheneinheit kommunikativ (kabelgebunden oder kabellos) verbunden sind, zu steuern.

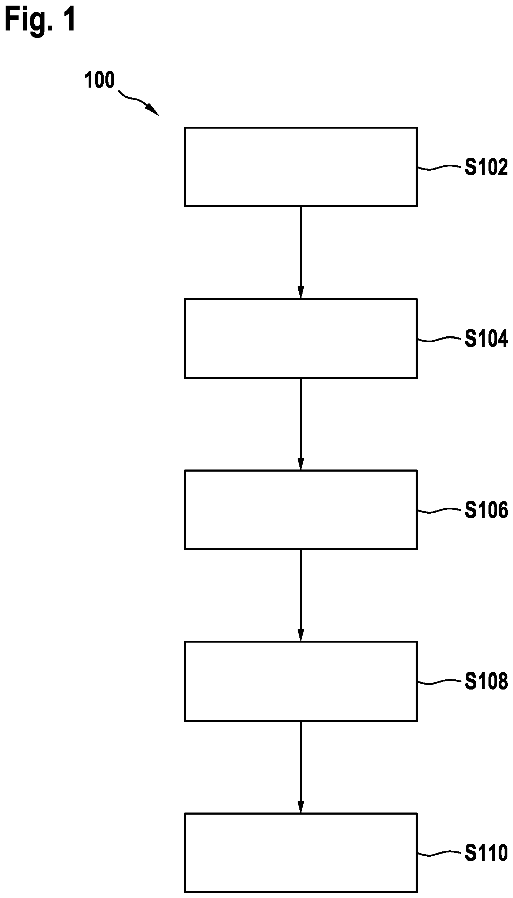

Während eines Abfahrens werden die einzelnen Verfahrensschritte S102 bis S110 des erfindungsgemäßen Verfahren 100, wie in Fig. 1 gezeigt, der Reihe nach ausgeführt. Die einzelnen Schritte werden nachfolgend im Detail beschrieben:
Eingangs wird in Schritt S102 das Bearbeitungswerkzeug ausgewählt, mit dem die Pflanzen bzw. Objekte auf einem Feld bearbeitet werden sollen. Die räumliche Genauigkeit, mit der die Pflanzen durch das Bearbeitungswerkzeug bearbeitet werden, hängt dabei, wie oben beschrieben, von der Art des Bearbeitungswerkzeuges ab. Das Bearbeitungswerkzeug kann vor einem Start des Abfahrens des Felds für die gesamte Dauer des Abfahrens festgelegt werden. Das Bearbeitungswerkzeug kann aber auch während eines Abfahrens gewechselt werden. Anschließend wird in Schritt S104 ein Bild von dem Feld, auf dem die Pflanzen wachsen, durch das Bilderfassungsmittel erfasst. Das Bilderfassungsmittel ist so an dem Fahrzeug angebracht, dass ein Bildsensor im Wesentlichen parallel zu einer Bodenoberfläche des Feldes ist. Zudem wird im Wesentlichen synchron zum Erfassen des Bilds eine Positionsinformation über die Position erlangt, an der die Bilder jeweils auf dem Feld erfasst werden. Die vom Positionssensor erlangte Positionsinformation wird mit dem Bild korreliert, so dass tatsächliche Positionen von Pixeln des Bilds auf dem Feld unter Berücksichtigung der Positionsinformation, des Bildwinkels des verwendeten Bilderfassungsmittels und des Abstands des Bilderfassungsmittels vom Boden bestimmt werden können. Das Bilderfassungsmittel kann aber auch so angebracht sein, dass der Bildsensor in einer beliebigen Richtung geneigt ist, um einen größeren Bereich des Feldes zu erfassen. In diesem Fall ist der Neigungswinkel beim Bestimmen der Position eines Pixels auf dem Feld zu berücksichtigen.

Im nachfolgenden Schritt S106 wird das erfasste Bild verarbeitet, um eine Position der zu bearbeitenden Pflanze auf dem Feld zu bestimmen. Dabei werden die Positionen der einzelnen zu bearbeitenden Pflanzen mit einer räumlichen Auflösung bestimmt, die der räumlichen Genauigkeit des Bearbeitungswerkzeugs entspricht, da für ein Bearbeitungswerkzeug, das eine geringere räumliche Genauigkeit aufweist, eine geringere räumliche Auflösung zum Bearbeiten einer Pflanze ausreichend ist.

Wie bereits eingangs beschrieben, wird die Position einer Pflanze auf einem Feld mittels einer semantischen Segmentierung des erfassten Bilds bestimmt. Die semantische Segmentierung wird durch Anwendung eines sog. Fully Convolutional Dense Net erhalten. Eine semantische Segmentierung kann aber auch durch ein Fully Convolutional Neural Network oder ein anderes geeignetes neuronales Netz erhalten werden.

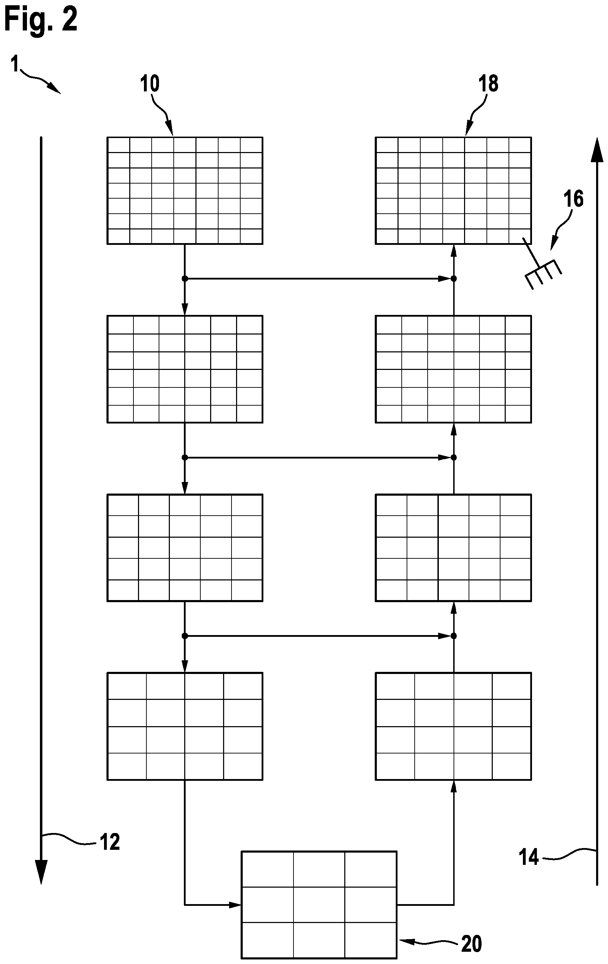

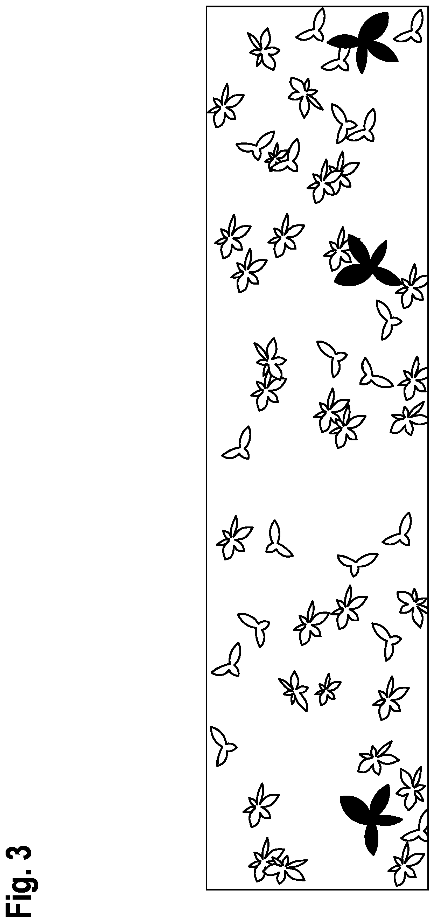

Ein neuronales Netz 1 für eine semantische Segmentierung zeichnet sich, wie in Fig. 2 schematisch gezeigt, dadurch aus, dass es einen Downsampling-Pfad 12 und einen Upsampling-Pfad 14 aufweist. Ein erfasstes Bild 10 (d.h. die RGB-Werte des erfassten Bilds) wird in das verwendete neuronale Netz 1 eingegeben und die räumliche Auflösung des erfassten Bilds 10 wird durch Anwenden von mehreren unterschiedlichen Layern im Downsampling-Pfad 12 sukzessive verringert, während von Layer zu Layer zusätzliche Merkmale bzw. Features erhalten werden. Es ist dazu anzumerken, dass die Anzahl von Pixeln bzw. Bereichen in dieser und in den folgenden Figuren nur schematisch zu verstehen ist, da eine originalgetreue Darstellung grafisch nicht umsetzbar ist. Im Upsampling-Pfad 14 des neuronalen Netzes 1 wird die im Downsampling-Pfad 12 erlangten Merkmale mit Hilfe von mehreren Layern wieder auf die ursprüngliche räumliche Auflösung des in das neuronale Netz 1 eingegebenen Bilds 10 hochgerechnet, so dass das Bild 10 durch ein Prediction Layer 16, wie in Fig. 3, pixelweise semantisch segmentiert werden kann. In Fig. 3 sind Nutzpflanzen schwarz und die zu bearbeitenden Beikräuter umrandet dargestellt.

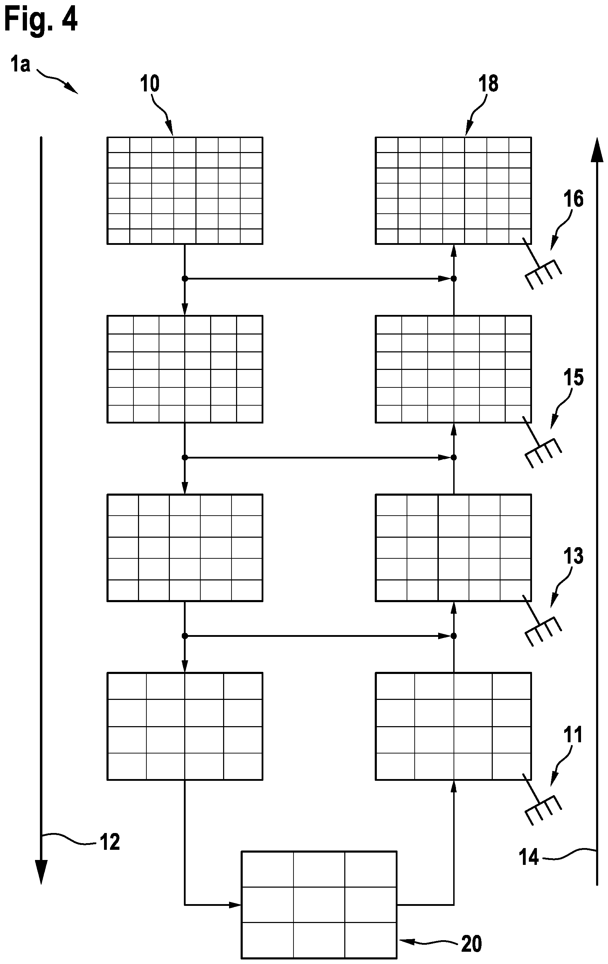

Eine geringere räumliche Auflösung bei der Bestimmung der Position wird in der vorliegenden Ausführungsform, wie in Fig. 4 gezeigt, dadurch erhalten, dass ein oder mehrere Prediction Layer 11, 13, 15 im Upsampling-Pfad 14 eines neuronalen Netzes 1a eingefügt werden. Folglich erfolgt eine Bestimmung der semantischen Segmentierung nicht mehr auf Pixelebene, sondern für Bereiche, die sich aus mehreren Pixeln zusammensetzen, so dass sie eine gröbere bzw. geringere räumliche Auflösung als das ursprünglich in das neuronale Netz 1 eingegebene Bild 10 aufweisen.

Die Bereiche werden dabei auch als Superpixel bezeichnet. Auf diese Weise können eine Verarbeitungslast und eine Verarbeitungsdauer reduziert werden. Zudem wird ein robusteres Ergebnis für die Positionsbestimmung der Pflanze verglichen mit einer pixelgenauen Bestimmung, bei der eine Fehlerwahrscheinlichkeit erhöht ist, erhalten.

Durch Anwendung der beschriebenen Prozedur ist es möglich, dass aus einer einzigen Netzarchitektur semantische Segmentierungen mit unterschiedlichen räumlichen Auflösungen generiert werden können, ohne dass die Architektur des verwendeten Netzes in großem Ausmaß verändert werden muss (vergleiche Fig. 2 und 4).

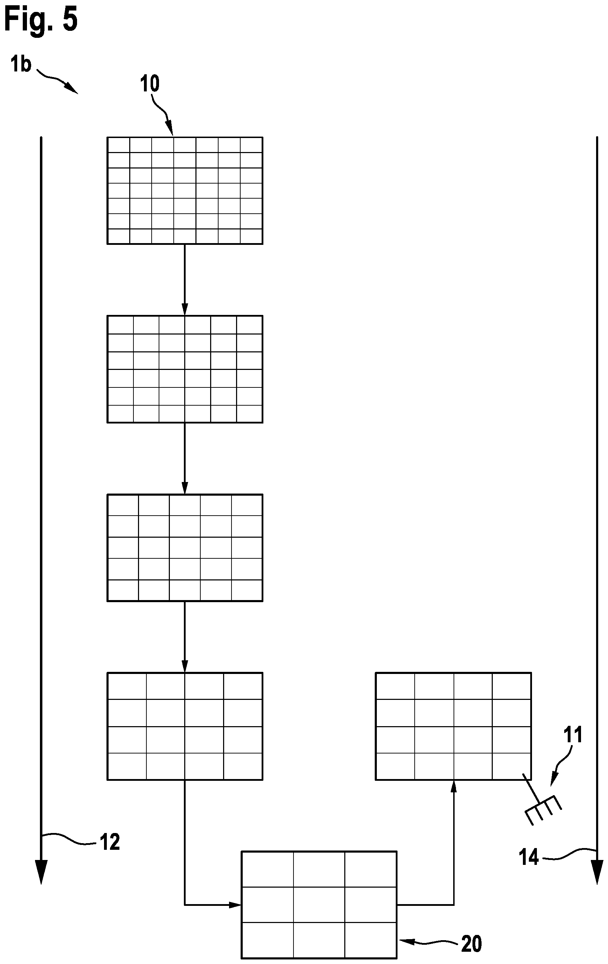

Darüber hinaus ist es auch möglich, dass ein neuronales Netz 1b, wie in Fig. 5 gezeigt, nur bis zu einer bestimmten maximalen räumlichen Auflösung aufgebaut und trainiert wird. In diesem Beispiel wird das neuronale Netz 1b bis zu einer Prediction Layer 11 in einem unteren Abschnitt des Upsampling-Pfads 14 aufgebaut und trainiert, so dass eine semantische Segmentierung für vergleichsweise große Bereiche im Bild erhalten wird. Wird jedoch eine höhere Auflösung benötigt, kann das Netz auch bis zu einer höheren Ebene aufgebaut und trainiert werden, wobei wiederum mehrere Prediction Layer (z.B. die Prediction Layer 11 und 13) eingefügt werden können. Das Netz kann aber auch nur mit der Prediction Layer 13, ohne die Prediction Layer 11, aufgebaut werden. Auf diese Weise können verschiedene räumliche Auflösungen durch das neuronale Netz 1b bereitgestellt werden, während der Aufwand für die Generierung sowie für das Training des neuronalen Netzes 1b reduziert wird.

Nachdem die semantische Segmentierung für die Bereiche im erfassten Bild 10 generiert wurde, kann die Position einer zu bearbeitenden Pflanze auf dem Feld bestimmt werden. Die Position einer Pflanze auf einem Feld kann dabei durch Anwendung des erfindungsgemäßen Verfahrens mit einer räumlichen Auflösung bestimmt werden, die der räumlichen Genauigkeit des ausgewählten Bearbeitungswerkzeugs entspricht, da, wie oben erwähnt, die tatsächliche Position der einzelnen Pixel und somit auch die Position der Bereiche auf dem Feld bekannt ist.

Nachdem die Position der zu bearbeitenden Pflanze auf dem Feld bestimmt ist, kann das ausgewählte Bearbeitungswerkzeug in Schritt S108 zur Position der Pflanze hingeführt werden und die entsprechende Bearbeitung kann für die einzelne Pflanze durchgeführt werden. Dabei kann ein mechanisches Werkzeug genau bis zur Position der Pflanze hingeführt werden oder der Sprayer kann zum Ausbringen des Pestizids, Pflanzenschutzmittels oder Düngers bis zu einem vorgegebenen Abstand an das Beikraut bzw. die Nutzpflanze herangeführt und auf diese gerichtet werden. Um eine exakte Steuerung der beweglichen Vorrichtung zu ermöglichen, ist es dabei ggf. erforderlich, die durch das Bild ermittelte Position der Pflanze in das Koordinatensystem der beweglichen Vorrichtung umzurechnen. Zudem ist eine Geschwindigkeit, mit der sich das Fahrzeug vorwärtsbewegt, beim Hinführen des Bearbeitungswerkzeuges zu berücksichtigen.

Anschließend wird die Pflanze in Schritt S110 mit dem Bearbeitungswerkzeug bearbeitet. Die Pflanze wird dabei durch die Anwendung des mechanischen Werkzeugs entfernt, gehäckselt oder zerstört oder mit dem Pestizid, Pflanzenschutzmittel bzw. Pestizid besprüht. Durch die mechanische Bearbeitung der Pflanzen bzw. das gezielte Ausbringen von chemischen Substanzen kann folglich die bei konventionellen Verfahren ausgebrachte Menge an chemischen Substanzen deutlich verringert werden, so dass Kosten und der Einfluss auf die Umwelt verringert werden.

Das erfindungsgemäße Verfahren weist aufgrund der Verwendung einer bereichsweisen semantischen Segmentierung anstelle einer pixelweisen semantischen Segmentierung die folgenden Vorteile auf: Es wird eine schnellere Inferenz durch das veränderte neuronale Netz erzielt, da während der Klassifikation der Bereiche mit gröberer räumlicher Auflösung aufgrund eines verkürzten Upconversion-Pfads in der Recheneinheit weniger Rechenleistung benötigt wird. Bei einem trainierten Netz mit mehreren Prediction Layern ist kein Nachtrainieren bei Wahl einer anderen räumlichen Auflösung für ein anderes Bearbeitungswerkzeug erforderlich. Die semantische Segmentierung für Bereiche mit einer geringeren räumlichen Auflösung ist robuster als eine "normale" pixelgenaue semantische Segmentierung, da eine größere Menge an Merkmalen für die Klassifikation der Bereiche zur Verfügung steht. Da die hohe Auflösung des ursprünglich eingegebenen Bilds beibehalten wird, gehen Details der Pflanzen nicht verloren und stehen somit für die Generierung von Merkmalen zur Verfügung.

Nachfolgend wird ein Verfahren zum Erzeugen von Trainingsdaten für das oben beschriebene neuronale Netz 1a, 1b beschrieben. Die mit Ground Truth annotierten Bilder werden während des Trainings auf die gewünschte räumliche Auflösung herunterskaliert, wobei bei der Skalierung die folgenden Vererbungsregeln berücksichtigt werden: Die Klasse Nutzpflanze wird dominant vererbt. Falls folglich in dem Bereich mit einer gröberen räumlichen Auflösung mindestens ein Pixel bzw. ein kleinerer Bereich mit der Annotation Nutzpflanze vorhanden ist, wird der Bereich als Nutzpflanze annotiert. Die Klasse Beikraut wird rezessiv gegenüber der Klasse Nutzpflanze jedoch dominant gegenüber der Klasse Hintergrund bzw. Boden vererbt. Falls in dem Bereich mit gröberer räumlicher Auflösung kein Pixel bzw. kleinerer Bereich mit der Annotation Nutpflanze, aber mindestens ein Pixel mit der Annotation Beikraut vorhanden ist, wird der Bereich als Beikraut annotiert. Der Hintergrund vererbt sich demzufolge rezessiv. Es ist anzumerken, dass das Verfahren zum Generieren von Trainingsdaten auch kaskadenartig durchgeführt werden kann, so dass mehrere annotierte kleinere Bereich auf einen größeren Bereich skaliert und annotiert werden. Die oben beschriebenen Vererbungsregeln werden dabei analog angewendet.

Dieses Verfahren zum Gewinnen von den mit Ground Truth annotierten Bildern mit einer gröberen räumlichen Auflösung kann somit sicherstellen, dass keine relevanten Informationen während des Trainings aufgrund der Skalierung verloren gehen. Zudem wird die Qualität der Ground Truth Daten für die geringeren Auflösungen erhöht, da der Einfluss von fehlerhaft annotierten Pixeln aufgrund der Mittelung auf größere Berieche reduziert wird. Folglich ist das erfindungsgemäße Verfahren 100 zum Bearbeiten von Pflanzen robuster gegenüber Trainingsdaten, die eine falsch annotierte Grund Truth aufweisen.

Nachfolgend wird ein Verfahren zum Trainieren des neuronalen Netzes 1a, 1b beschrieben, das die Trainingsdaten verwendet, die eine unterschiedliche räumliche Auflösung aufweisen und gemäß dem oben beschriebenen Verfahren generiert werden. Für das Training der Netze wird typischerweise eine Loss-Funktion bestimmt, die angibt, wie groß ein Fehler in der durch das neuronale Netz bestimmten semantischen Segmentierung bei einem in das neuronale Netz eingegebenen Bild gegenüber der Ground Truth des eingegebenen Bilds ist. Für das gleichzeitige Training mit mehreren räumlichen Auflösungen, wird die Loss-Funktion für ein eingegebenes Bild für jeden einzelnen Prediction Layer, der eine bestimmte räumliche Auflösung der semantischen Segmentierung bereitstellt, gleichzeitig berechnet und das Netz wird für alle räumlichen Auflösungen simultan trainiert. Auf diese Weise kann das gesamte Netz in einem Durchgang trainiert werden, ohne dass es erforderlich ist, mehrere Trainingsvorgänge separat anzustoßen, so dass eine Dauer eines Trainings verringert werden kann.

Für das Training einer einzelnen räumlichen Auflösung, die durch ein Prediction Layer nachträglich eingefügt wird, wird das bereits für andere räumliche Auflösungen vortrainierte Netz nur für den nachträglich eingefügten Predicition Layer nachtrainiert. Das restliche bereits trainierte Netz kann unverändert bleiben. Auf diese Weise kann ein neuronales Netz für räumliche Auflösungen, die zusätzlich benötigt werden und noch nicht trainiert wurden, auf einfache Weise angepasst und nachtrainiert werden, ohne dass die Netzarchitektur stark verändert werden muss.

### Zweite Ausführungsform

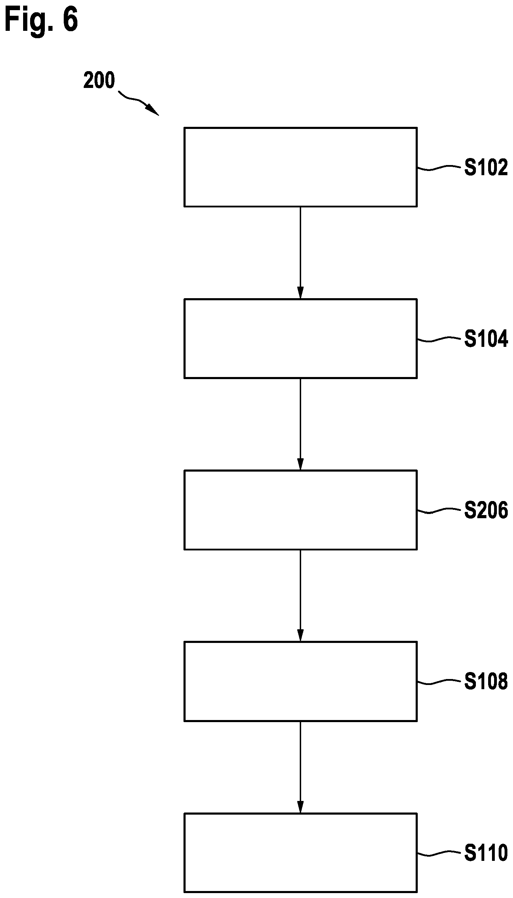

Die zweite Ausführungsform unterscheidet sich von der ersten Ausführungsform dadurch, dass anstelle des in Fig. 1 gezeigten Verfahrens 100 das in Fig. 6 gezeigte Verfahren 200 ausgeführt wird. Das Verfahren 200 unterscheidet sich vom Verfahren 100 dadurch, dass der Schritt S206 anstelle des Schritts S106 zum Ermitteln der Position der zu bearbeitenden Pflanze auf dem Feld ausgeführt wird. Die verbleibenden Schritte S102, S104, S108 und S110 werden gemäß der ersten Ausführungsform ausgeführt.

Die gröbste räumliche Auflösung der Merkmale ist bei einem neuronalen Netz 1a, 1b, wie in Fig. 4 und Fig. 5 gezeigt, durch die Tiefe und somit durch die Anzahl von auflösungsreduzierenden Layer im Downconversion-Pfad 12 des neuronalen Netzes 1a, 1b vorgegeben. Das Verfahren 100 gemäß der ersten Ausführungsform zum semantischen Segmentieren von Bereichen ist dabei auf die räumliche Auflösung der niedrigsten Ebene im Downconversion-Pfad 12 begrenzt. Wird die räumliche Auflösung im Downconversion-Pfad 12 beispielsweise dreimal halbiert, führt dies bei einer Kamera-Boden-Auflösung von 0,5 mm/Pixel zu einer gröbsten räumlichen Auflösung von 4 mm/Bereich. Diese Auflösung ist jedoch für ein Bearbeitungswerkzeug mit einer geringen räumlichen Genauigkeit, wie etwa einen Sprayer, immer noch zu hoch. Reicht folglich eine gröbere räumliche Auflösung bei der semantischen Segmentierung aus, kann diese nicht berechnet werden, ohne die Architektur des neuronalen Netzes 1a, 1b tiefer zu gestalten, was wiederum zu einer Erhöhung der Rechenzeit führt.

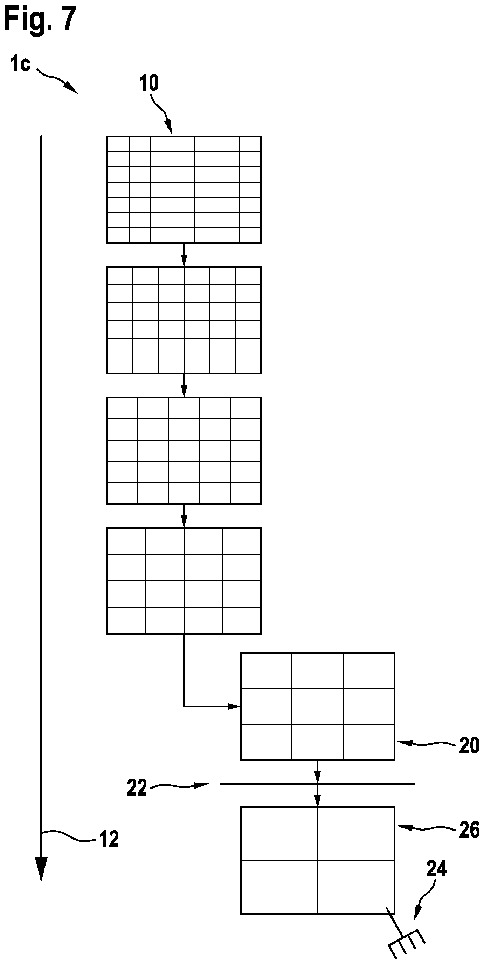

Falls eine gröbere Auflösung bei Ermittlung einer Position erforderlich ist, ist zum Zweck einer Vermeidung einer tieferen Architektur ein Schiebefenster-Ansatz bzw. Sliding-Window-Ansatz anwendbar, wie er in dem in Fig. 7 gezeigten neuronalen Netz 1c implementiert ist. Bei diesem Ansatz wird ein beliebig skalierbares Fenster schrittweise im Merkmalsraum 20 mit der geringsten räumlichen Auflösung (der auch als Bottleneck bezeichnet) verschoben und die im Schiebefenster enthaltenen Merkmale werden ausgeschnitten und weiterverarbeitet. Das Verschieben und Ausschneiden kann dabei entweder ohne Überlappung (Stride entspricht der Breite des Fensters) oder mit einer bestimmten Überlappung (Stride entspricht z.B. 10 Pixel) zwischen zwei benachbarten Ausschnitten im Bild ausgeführt werden. Jeder durch das Fenster ausgeschnittene Bereiche wird separat klassifiziert und die Ergebnisse der einzelnen Klassifikationen werden dann in einem Ergebnisbild zusammengeführt. Das Ergebnis bei einem sehr geringen Stride von einem Pixel wäre dabei mit einem Ergebnis einer pixelweisen semantischen Segmentierung vergleichbar. Es ist bei Anwendung des Schiebefenster-Ansatzes darauf zu achten, die Auflösung des Fensters und die Größe der Überlappung so zu wählen, dass die Auflösung des Ergebnisbilds sowie eine Größe der semantisch segmentierten Bereiche für das nachfolgende Hinführen des Bearbeitungswerkzeugs in S108 und das Bearbeiten der Pflanze mit dem Bearbeitungswerkzeug in S110 optimiert ist.

Das Schiebefenster kann durch einen konfigurierbaren Average Pooling Layer 22 implementiert werden, um die räumliche Auflösung variabel zu gestalten. Wird ein Average Pooling Layer 22 hinzugefügt, der in der Größe konfigurierbar ist (z.B., 2x2-Pixel, 3x3-Pixel, 4x4-Pixel, usw.), kann der Merkmalsraum 20, der am unteren Ende des Downconversion-Pfads erhalten wird, in einen Merkmalsraum 26 transformiert werden, der eine beliebige räumliche Auflösung aufweist. Ein Prediction Layer 24 nach dem Average Pooling Layer 22 (d.h. dem Schiebefenster) kann somit aufgrund der Mittelung der Merkmale ein robusteres Ergebnis bei freier Wahl der räumlichen Auflösung erzielen.

Das Verfahren 200 zum Bearbeiten von zu bearbeitenden Pflanzen auf einem gemäß der zweiten Ausführungsform stellt dabei die folgenden Vorteile bereit: Aufgrund einer Mittelung der Merkmale über einen Bereich mit einer gröberen räumlichen Auflösung ist der Klassifizierer robuster gegenüber Daten mit einer pixelweisen Ground Truth, bei denen einzelne Pixel falsch annotiert sein können. Aufgrund der gröberen räumlichen Auflösung wird zudem ein besseres Klassifikationsergebnis mit einem geringeren Klassifikationsrauschen erhalten, da eine größere Menge an Merkmalen für die Klassifikation der Bereiche zur Verfügung steht. Die räumliche Auflösung kann je nach Bearbeitungswerkzeug (mechanische Beikrautvernichtung, Sprayer etc.) durch Ändern der Auflösung des Average Pooling Layers 22 angepasst werden. Eine gröbere Auflösung kann folglich mit einem geringen Mehraufwand erhalten werden.

Es ist anzumerken, dass für die zweite Ausführungsform das oben beschriebene Verfahren zum Generieren von Trainingsdaten ebenfalls anwendbar ist.

### weitere Ausführungsformen

Das Verfahren 100 gemäß der ersten Ausführungsform und das Verfahren 200 gemäß der zweiten Ausführungsformen werden zum Bearbeiten einer auf einem Feld wachsenden Pflanze angewendet. Die beiden Verfahren 100, 200 führen eine Bestimmung einer Position von einer zu bearbeitenden Pflanze auf einem Feld mittels einer semantische Segmentierung für Bereiche mit einer gröberen Auflösung durch. Die räumliche Auflösung der Bereiche entspricht dabei einer räumlichen Genauigkeit eines ausgewählten Bearbeitungswerkzeugs. Die vorliegende Erfindung ist jedoch nicht darauf beschränkt, dass nur eines der Verfahren 100 oder 200 verwendet wird. Vielmehr können beide Ausführungsformen durch Einfügen einer Oder-Entscheidung vor den Schritten S106 bzw. S206 nebeneinander implementiert werden. Reicht folglich eine gröbere Auflösung bei der Positionsbestimmung aus und kann diese nicht durch den Schritt S106 gemäß der ersten Ausführungsform bereitgestellt werden, kann der Schritt 206 gemäß der zweiten Ausführungsform zur Bestimmung der gröberen Auflösung verwendet werden.

Das vorgesehene Einsatzgebiet des erfindungsgemäßen Verfahrens bezieht sich auf autonome Feldroboter bzw. intelligente Anbaugeräte für die Bodenbearbeitung und Pflanzenschutz im Gemüse-, Garten- und Ackerbau. Grundsätzlich kann diese Methode aber auch für andere Aufgaben in der semantischen Segmentierung, bei denen eine geringere Auflösung erforderlich bzw. ausreichend ist, eingesetzt werden.

## Patentansprüche

1. Verfahren (100, 200) zum Bearbeiten von Pflanzen auf einem Feld, mit den folgenden Schritten:
Auswählen (S102) eines Bearbeitungswerkzeugs zum Bearbeiten von Pflanzen, wobei das Bearbeitungswerkzeug eine spezifische räumliche Genauigkeit aufweist;
Erfassen (S104) eines Bilds (10) von dem Feld, wobei das Bild mit einer Positionsinformation korreliert wird;
Bestimmen (S106, S206) einer Position einer zu bearbeitenden Pflanze auf dem Feld mittels einer semantischen Segmentierung des Bilds (10), wobei die Position der Pflanze mit einer räumlichen Auflösung bestimmt wird, die der räumlichen Genauigkeit des Bearbeitungswerkzeugs entspricht;
Hinführen (S108) des Bearbeitungswerkzeugs zur Position der Pflanze; und
Bearbeiten (S110) der Pflanze mit dem Bearbeitungswerkzeug.

2. Verfahren (100) gemäß Anspruch 1, wobei
die räumliche Auflösung durch Einfügen eines Prediction Layer (11, 13, 15) an einer entsprechenden Stelle im Upsampling-Pfad (14) eines neuronalen Netzes (1a, 1b) festgelegt wird.

3. Verfahren (100) gemäß Anspruch 2, wobei
das neuronale Netz (1b) nur bis zu einem bestimmten Predicition Layer (11, 13, 15) im Upconversion-Pfad (14) aufgebaut und trainiert wird.

4. Verfahren (200) gemäß Anspruch 1, wobei
die räumliche Auflösung durch Anwenden eines Schiebefensters mit einer entsprechenden Größe auf einen Merkmalsraum (20), der von einem niedrigsten Layer im Downsampling-Pfad (12) des neuronalen Netzes (1c) ausgegeben wird, festgelegt wird, so dass ein Merkmalsraum (26) mit gröberer räumlicher Auflösung erhalten wird; und
der Merkmalsraum (26) mit gröberer räumlicher Auflösung zum semantischen Segmentieren des Bilds (10) in einen Prediction Layer (24) eingegeben wird.

5. Verfahren (200) gemäß Anspruch 4, wobei
das Schiebefenster durch ein Average Pooling Layer (22) mit einer variablen Größe implementiert wird.

6. Verfahren (100, 200) gemäß einem der Ansprüche 1 bis 5, wobei die zu bearbeitenden Pflanzen Beikräuter sind.

7. Verfahren (100, 200) gemäß einem der Ansprüche 1 bis 5, wobei die zu bearbeitenden Pflanzen Nutzpflanzen sind.

8. Verfahren zum Generieren von Trainingsdaten für ein neuronales Netz (1a, 1b, 1c), das für das Verfahren gemäß einem der Ansprüche 2 bis 5 verwendet wird, bei dem ein pixel- oder bereichsweise annotiertes Bild auf größere Bereiche skaliert wird, wobei
ein Bereich, in dem mindestens eine Klasse Nutzpflanze vorhanden ist, mit einer Klasse Nutzpflanze annotiert wird,
ein Bereich, in dem keine Klasse Nutzpflanze und mindestens eine Klasse Beikraut vorhanden ist, mit der Klasse Beikraut annotiert wird, und
ein Bereich, in dem keine Klasse Nutzpflanze und keine Klasse Beikraut vorhanden ist, mit einer Klasse Boden annotiert wird.

9. Verfahren zum Trainieren eines neuronalen Netzes (1a, 1b), das für das Verfahren gemäß einem der Ansprüche 2 oder 3 verwendet wird, bei dem:
eine Loss-Funktion bestimmt wird, die eine Größe eines Fehlers bei einer durch ein neuronales Netz (1a, 1b) bestimmten semantischen Segmentierung verglichen mit durch das Verfahren gemäß Anspruch 8 generierten Trainingsdaten angibt;
die Loss-Funktion für das eingegebene Bild für jede räumliche Auflösung gleichzeitig berechnet wird; und
das Netz für alle räumlichen Auflösungen simultan trainiert wird.

10. Verfahren gemäß Anspruch 9, wobei
das neuronale Netz (1a, 1b), in das eine einzelne räumliche Auflösung nachträglich eingefügt wird, nur für die nachträglich eingefügte räumliche Auflösung nachtrainiert wird.

11. Steuereinheit zum Ansteuern eines Bearbeitungswerkzeugs zum Bearbeiten von Pflanzen auf einem Feld, wobei die Steuereinheit eingerichtet ist, die folgenden Schritte durchzuführen:
Empfangen eines erfassten Bilds (10) von dem Feld, wobei das Bild mit einer Positionsinformation korreliert wird;
Bestimmen einer Position einer zu bearbeitenden Pflanze auf dem Feld mittels einer semantischen Segmentierung des Bilds (10), wobei die Position der Pflanze mit einer räumlichen Auflösung bestimmt wird, die der räumlichen Genauigkeit des Bearbeitungswerkzeugs entspricht;
Ausgeben eines Steuersignals zum Ansteuern des Bearbeitungswerkzeugs, um die Pflanze zu bearbeiten.

12. Landwirtschaftlichen Arbeitsmaschine mit einem Bearbeitungswerkzeug zum Bearbeiten von Pflanzen auf einem Feld, und einer Steuereinheit nach Anspruch 11.

## Claims

1. Method (100, 200) for treating plants in a field, comprising the following steps:
selecting (S102) a treatment tool for treating plants, the treatment tool having a specific spatial accuracy;
capturing (S104) an image (10) of the field, the image being correlated with positional information;
determining (S106, S206) a position of a plant to be treated in the field by means of semantic segmentation of the image (10), the position of the plant being determined with a spatial resolution which corresponds to the spatial accuracy of the treatment tool;
guiding (S108) the treatment tool to the position of the plant; and
treating (S110) the plant with the treatment tool.

2. Method (100) according to Claim 1,
the spatial resolution being established by inserting a prediction layer (11, 13, 15) at a corresponding point in the upsampling path (14) of a neural network (1a, 1b).

3. Method (100) according to Claim 2,
the neural network (1b) only being built up and trained to a specific prediction layer (11, 13, 15) in the upconversion path (14).

4. Method (200) according to Claim 1,
the spatial resolution being established by applying a sliding window of a corresponding size to a feature space (20), which is output by a lowest layer in the downsampling path (12) of the neural network (1c), so that a feature space (26) with coarser spatial resolution is obtained; and
the feature space (26) with coarser spatial resolution is input into a prediction layer (24) for the semantic segmentation of the image (10).

5. Method (200) according to Claim 4,
the sliding window being implemented by an average pooling layer (22) of a variable size.

6. Method (100, 200) according to one of Claims 1 to 5,
the plants to be treated being weeds.

7. Method (100, 200) according to one of Claims 1 to 5,
the plants to be treated being useful plants.

8. Method for generating training data for a neural network (1a, 1b, 1c) which is used for the method according to one of Claims 2 to 5 and in which an image annotated pixel by pixel or region by region is scaled to larger regions,
a region in which at least one class of useful plants is present being annotated with a useful-plant class,
a region in which no class of useful plants and at least one class of weeds is present being annotated with the weed class, and
a region in which no class of useful plants and no class of weeds is present being annotated with a soil class.

9. Method for training a neural network (1a, 1b) which is used for the method according to either of Claims 2 and 3 and in which:
a loss function is determined, indicating a magnitude of an error in a semantic segmentation determined by a neural network (1a, 1b) as compared with training data generated by the method according to Claim 8;
the loss function for the input image is calculated simultaneously for each spatial resolution; and
the network is trained simultaneously for all the spatial resolutions.

10. Method according to Claim 9,
the neural network (1a, 1b) into which an individual spatial resolution is subsequently inserted being only re-trained for the subsequently inserted spatial resolution.

11. Control unit for activating a treatment tool for treating plants in a field, the control unit being set up to carry out the following steps:
receiving a captured image (10) of the field, the image being correlated with positional information;
determining a position of a plant to be treated in the field by means of semantic segmentation of the image (10), the position of the plant being determined with a spatial resolution which corresponds to the spatial accuracy of the treatment tool;
outputting a control signal for activating the treatment tool in order to treat the plant.

12. Agricultural machine with a treatment tool for treating plants in a field and a control unit according to Claim 11.

## Revendications

1. Procédé (100, 200) permettant de traiter des plantes dans un champ, comprenant les étapes suivantes consistant à :
sélectionner (S102) un outil de traitement pour traiter des plantes, l'outil de traitement présentant une précision spatiale spécifique ;
acquérir (S104) une image (10) du champ, l'image étant mise en corrélation avec une information de position ;
déterminer (S106, S206) une position d'une plante à traiter dans le champ au moyen d'une segmentation sémantique de l'image (10), la position de la plante étant déterminée avec une résolution spatiale qui correspond à la précision spatiale de l'outil de traitement ;
guider (S108) l'outil de traitement jusqu'à la position de la plante ; et
traiter (S110) la plante avec l'outil de traitement.

2. Procédé (100) selon la revendication 1, dans lequel la résolution spatiale est fixée par l'insertion d'un niveau de prédiction (11, 13, 15) à un endroit correspondant sur le chemin de suréchantillonnage (14) d'un réseau neuronal (1a, 1b).

3. Procédé (100) selon la revendication 2, dans lequel le réseau neuronal (1b) n'est établi et entraîné que jusqu'à un niveau de prédiction (11, 13, 15) déterminé sur le chemin de surconversion (14).

4. Procédé (200) selon la revendication 1, dans lequel la résolution spatiale est fixée en appliquant une fenêtre mobile d'une dimension correspondante à un espace d'attributs (20) qui est sorti par un niveau le plus bas sur le chemin de sous-échantillonnage (12) du réseau neuronal (1c) de sorte qu'un espace d'attributs (26) d'une résolution spatiale plus grossière est obtenu ; et l'espace d'attributs (26) de résolution spatiale plus grossière est entré dans un niveau de prédiction (24) pour une segmentation sémantique de l'image (10).

5. Procédé (200) selon la revendication 4, dans lequel la fenêtre mobile est mise en œuvre par un niveau de regroupement moyen (22) de dimension variable.

6. Procédé (100, 200) selon l'une quelconque des revendications 1 à 5, dans lequel
les plantes à traiter sont des mauvaises herbes.

7. Procédé (100, 200) selon l'une quelconque des revendications 1 à 5, dans lequel
les plantes à traiter sont des plantes utiles.

8. Procédé permettant de générer des données d'entraînement pour un réseau neuronal (1a, 1b, 1c) qui est utilisé pour le procédé selon l'une quelconque des revendications 2 à 5, dans lequel une image marquée pixel par pixel ou zone par zone est mise à l'échelle de zones plus grandes, dans lequel
une zone dans laquelle il existe au moins une catégorie de plantes utiles est marquée par une catégorie de plantes utiles,
une zone dans laquelle il n'existe aucune catégorie de plantes utiles et dans laquelle il existe au moins une catégorie de mauvaises herbes est marquée par la catégorie mauvaises herbes, et
une zone dans laquelle il n'existe aucune catégorie de plantes utiles et aucune catégorie de mauvaises herbes est marquée par une catégorie sol.

9. Procédé permettant d'entraîner un réseau neuronal (1a, 1b) qui est utilisé pour le procédé selon l'une quelconque des revendications 2 ou 3, dans lequel :
une fonction de perte est déterminée qui indique une ampleur d'une erreur lors d'une segmentation sémantique déterminée par un réseau neuronal (1a, 1b) en comparaison avec des données d'entraînement générées par le procédé selon la revendication 8 ;
la fonction de perte pour l'image entrée est calculée simultanément pour chaque résolution spatiale ; et
le réseau est entraîné simultanément pour toutes les résolutions spatiales.

10. Procédé selon la revendication 9, dans lequel le réseau neuronal (1a, 1b) auquel une résolution spatiale individuelle est insérée a posteriori n'est ré-entraîné que pour la résolution spatiale insérée a posteriori.

11. Unité de commande permettant de piloter un outil de traitement pour traiter des plantes dans un champ, l'unité de commande étant conçue pour exécuter les étapes suivantes consistant à :
recevoir une image acquise (10) du champ, l'image étant mise en corrélation avec une information de position ;
déterminer une position d'une plante à traiter dans le champ au moyen d'une segmentation sémantique d'une image (10), la position de la plante étant déterminée avec une résolution spatiale qui correspond à la précision spatiale de l'outil de traitement ;
sortir un signal de commande pour piloter l'outil de traitement pour traiter la plante.

12. Machine de travail agricole, comprenant un outil de traitement pour traiter des plantes dans un champ, et une unité de commande selon la revendication 11.
